# EUROPÄISCHE PATENTSCHRIFT

(11) **EP 0 940 071 B1**
(45) Veröffentlichungstag und Bekanntmachung des Hinweises auf die Patenterteilung: **15.05.2002**
(21) Anmeldenummer: 99103361.4
(22) Anmeldetag: 20.02.1999
(51) Int. Cl.: A01D 34/66

(54) **Gehäuseeinheit eines mehrteiligen Werkzeugbalkens**
Housing unit for a multi-part beam-like work tool
Unité de boîte pour outil de travail en forme de poutre à parties multiples

(30) Priorität: 04.03.1998 US 34495
(43) Veröffentlichungstag der Anmeldung: 08.09.1999
(73) Patentinhaber: DEERE & COMPANY, Moline, Illinois 61265-8098 (US)
(72) Erfinder: Mellin, Michael James, Ottumwa, IW 52501 (US); Petersen, John Gregory, Ottumwa, IW 52501 (US); Parsons, Stephen Kenneth, Ottumwa, IW 52501 (US); Mentzer, Matthew Jay, 70100 Gray (FR)
(74) Vertreter: Magin, Ludwig Bernhard

(56) Entgegenhaltungen:
- EP-A- 0 460 491
- EP-A- 0 460 493
- DE-A- 2 624 523

## Beschreibung

Die Erfindung betrifft eine Gehäuseeinheit eines mehrteiligen Werkzeugbalkens mit beidseitigen Flanschen zur Verbindung mit weiteren Gehäuseeinheiten und einen aus derartigen Gehäuseeinheiten zusammengesetzten Mähbalken.

Die US-A-5,012,635 offenbart einen Mähbalken, der aus mehreren nebeneinander angeordneten und miteinander verschraubten Gehäuseeinheiten zusammengesetzt ist. Die Gehäuseeinheiten sind von einer flachen hohlen Bauweise und nehmen in ihrem Innern jeweils Zahnräder auf, die nach dem Zusammenfügen der Gehäuseeinheiten mit den Zahnrädern der benachbarten Gehäuseeinheit in Eingriff stehen. An einer rückwärtigen Fläche werden die Gehäuseeinheiten zusätzlich mit einem Träger verschraubt.

Das der Erfindung zugrunde liegende Problem wird darin gesehen, daß es nicht möglich ist, für Wartungs- oder Reparaturzwecke eine zwischen zwei Gehäuseeinheiten aufgenommene Gehäuseeinheit zu demontieren; vielmehr bedarf es hierzu der Demontage aller seitlich der zu entfernenden Gehäuseeinheit vorgesehenen Gehäuseeinheiten.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann eine einzelne Gehäuseeinheit um eine gedachte Achse schwenken, die parallel zu und zwischen den Haupterstreckungsebenen der Flansche verläuft oder senkrecht zu den Haupterstreckungsebenen bewegt und somit außer Eingriff mit den benachbarten Gehäuseeinheiten gebracht werden. Der Werkzeugbalken wird im übrigen hiervon also nicht berührt. Der Werkzeugbalken kann bei einer Kreiselegge, einem Mähgerät, einem Kreiselwender und dergleichen Anwendung finden und erforderlichenfalls ein Stirnradgetriebe enthalten.

Wenn die Flansche, d. h. deren Flächen, an denen sich die benachbarten Flansche berühren, parallel zueinander verlaufen, kann die betreffende Gehäuseeinheit um eine gedachte Achse gekippt und so außer Eingriff mit den benachbarten Gehäuseeinheiten gebracht werden.

Aufgrund einer Divergenz der Flansche entweder in die eine oder in die andere Richtung kann die Gehäuseeinheit linear außer Eingriff mit den benachbarten Gehäuseeinheiten gebracht werden. Die Flansche der benachbarten Gehäuseeinheiten verlaufen dann jeweils konvergierend. Die Ausrichtung der Flansche kann auch alternierend gestaltet werden.

Ein Winkel zwischen der Fläche des Flansches und einer auf der Haupterstreckungsebene stehenden Senkrechten zwischen 20 bis 40 Grad schafft genügend Raum für eine Bewegung der Gehäuseeinheit einerseits und gewährleistet andererseits, daß die Flanschfläche ausreichend groß ist, um eine tragfähige Verbindung zu erzielen.

Die betreffende Gehäuseeinheit kann selbst dann in der erwähnten Weise entfernt werden, wenn sie in ihrem Innern Zahnräder aufnimmt, die nach außen über die Flanschflächen hinausragen und in Eingriff mit wenigstens einem Zahnrad in der benachbarten Gehäuseeinheit bringbar sind, sofern der Teilkreis die Fläche des Flansches schneidet.

Eine sichere Verbindung ist trotz der geneigten Flanschflächen möglich, wenn Schrauben, z. B. in der Art von Stehbolzen oder Durchgangsschrauben verwendet werden, die sich durch Ausnehmungen erstrecken und in diesen evtl. gesichert werden, deren Mittenachse senkrecht zu der Fläche des Flansches verlaufen.

Bei einem Mähbalken kommt der Vorteil der Erfindung besonders zu tragen, da Wartungs- oder Reparaturarbeiten aufgrund der ständigen Gefahr, ein Hindernis zu treffen, relativ häufig anstehen können.

Zur Entlastung der Verbindung zwischen den Gehäuseeinheiten kann eine Versteifungstraverse verwendet werden, an der alle Gehäuseeinheiten befestigt werden.

In der Zeichnung ist ein nachfolgend näher beschriebenes Ausführungsbeispiel der Erfindung dargestellt. Es zeigt:
- Fig. 1: drei miteinander verbundene Gehäuseeinheiten mit einem Stirnradgetriebe im Innern in perspektivischer Ansicht
- Fig. 2: die Gehäuseeinheiten nach Figur 1 in Draufsicht,
- Fig. 3: die Gehäuseeinheiten nach Figur 1 in Vorderansicht und
- Fig. 4: die Gehäuseeinheiten nach Figur 1 in Vorderansicht, wobei eine mittlere Gehäuseeinheit demontiert ist.

Zunächst wird darauf hingewiesen, daß die Begriffe "rechts" und "links" ausgehend von einem Betrachter gewählt wurden, der hinter der beschriebenen Vorrichtung steht und in die Vorwärtsfahrtrichtung schaut.

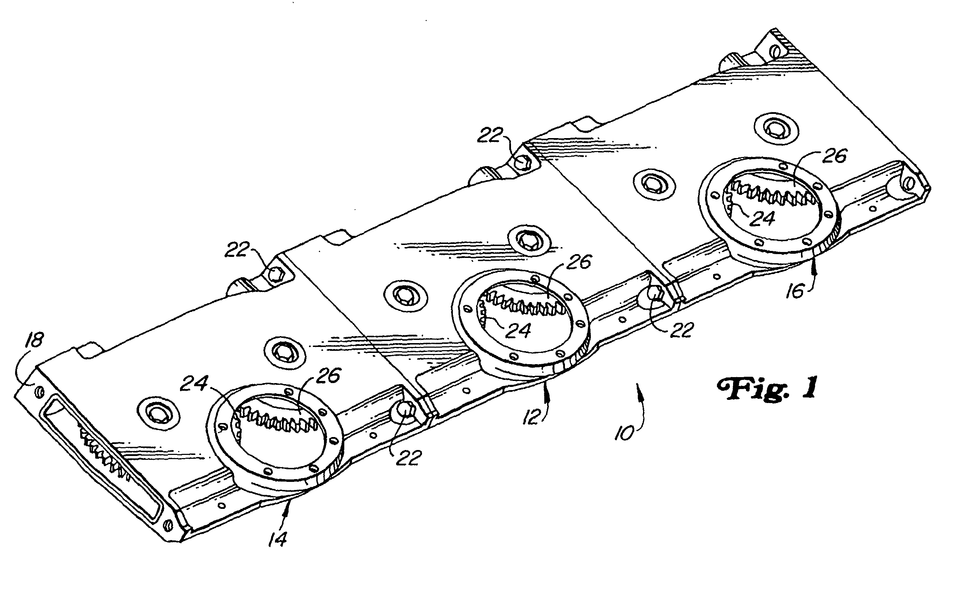

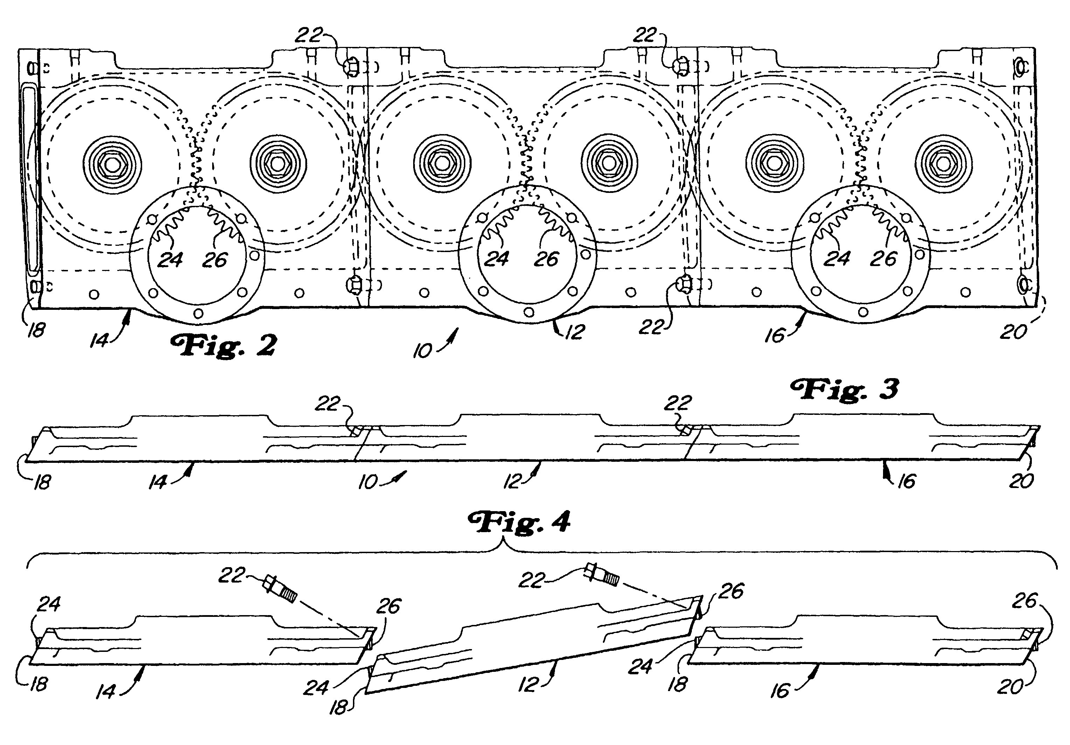

In den Figuren 1 bis 4 ist ein Bereich eines Gehäuses 10 eines als Mähbalken ausgebildeten Werkzeugbalkens eines Scheibenmähwerks gezeigt, das drei identische Gehäuseeinheiten enthält, von denen eine mittlere Gehäuseeinheit 12 an ihrer rechten bzw. linken Seite zwischen Gehäuseeinheiten 14 und 16 vorgesehen ist. Jede der Gehäuseeinheiten 12, 14, 16 enthält rechte und linke parallele Flansche 18 und 20, von denen der rechte und der linke Flansch 18 und 20 der mittleren Gehäuseeinheit 12 jeweils an den linken Flansch 20 der Gehäuseeinheit 14 und an den rechten Flansch 18 der Gehäuseeinheit 16 angeschraubt ist, z. B. mittels eines entsprechenden Paars von Schrauben 22, die als Stehbolzen ausgebildet sind. Wie dies am besten aus den Figuren 3 und 4 zu ersehen ist, sind die Flansche 18 und 20 bzw. deren Flächen eben und jeder ist gegenüber der Vertikalen um ca. 30 Grad abgewinkelt. Dieser Winkel kann geändert werden, wie dies nachfolgend erläutert wird. Die Schrauben 22, bzw. das Paar Stehbolzen, sind jeweils an vorderen und rückwärtigen Stellen der Gehäuseeinheiten 10 vorgesehen und werden in entsprechenden geneigten Ausnehmungen aufgenommen, die sich senkrecht durch den linken Flansch 20 erstrecken und die in mit Gewinde versehene und als Durchgangsbohrungen ausgebildete Ausnehmungen in dem rechten Flansch 18 eingeschraubt werden, so daß sie mit den geneigten Ausnehmungen fluchten, wenn die Flansche 18 und 20 für eine Verbindung durch die Schrauben 22 miteinander in ihre Stellung gebracht werden. Eine nicht gezeigte Versteifungstraverse würde normalerweise quer über den rückwärtigen Bereich der Gehäuseeinheiten 12, 14 und 16 geschraubt werden.

Wie dies in den Figuren 1 und 2 zu sehen ist, nimmt jede Gehäuseeinheit 12, 14 und 16 die Form eines flachen oder niedrigen Rohrs ein. In jeder Gehäuseeinheit 12, 14, 16 sind rechte und linke Zahnräder 24 und 26 eines Stirnradgetriebes, die zur Umlenkung miteinander kämmen, montiert, wobei das rechte Zahnrad 24 der mittleren Gehäuseeinheit 12 mit dem linken Zahnrad 26 der rechten Gehäuseeinheit 14 und das linke Zahnrad 26 der mittleren Gehäuseeinheit 12 mit dem rechten Zahnrad 24 der linken Gehäuseeinheit 16 kämmt. Es wird darauf hingewiesen, daß die Zähne der Zahnräder 24 und 26 jeder Gehäuseeinheit 12, 14, bzw. 16 über die Ebenen der Flansche 18 und 20 hinausragen, wobei eine Tangente des Teilkreises der miteinander kämmenden Zahnräder 24, 26 benachbarter Gehäuseeinheiten in den Ebenen der Schnittstellen der zusammengeschraubten Flansche 18 und 20 der benachbarten Gehäuseeinheiten 12, 14, bzw. 16 liegen.

In Figur 4 ist die mittlere Gehäuseeinheit 12 in einer Situation gezeigt, in der sie nicht mit den benachbarten Gehäuseeinheiten 14 und 16 verschraubt und entgegen dem Uhrzeigerdrehsinn um eine sich längs erstreckende Achse geschwenkt ist, so daß die Zähne des Zahnrades 24 an dem rechten Flansch 18 der Gehäuseeinheit 12 nach unten und frei von den Zähnen des Zahnrades 26, die sich von dem linken Flansch 20 der Gehäuseeinheit 14 weg erstrecken, bewegt, während sich die Zähne des Zahnrades 26, die sich von dem linken Flansch 20 der Gehäuseeinheit 12 weg erstrecken, nach oben und außer Eingriff mit den Zähnen des Zahnrades 24 bewegen, die sich von dem rechten Flansch 18 der Gehäuseeinheit 16 weg erstrecken.

Es wird somit erkannt, daß die geneigten Flansche 18, 20 der Gehäuseeinheiten 12, 14 und 16 es ermöglichen, daß die Gehäuseeinheit 12 von der Versteifungstraverse und den Gehäuseeinheiten 14 und 16 abgeschraubt und dann ohne die Gehäuseeinheiten 14 oder 16 zu stören, entfernt werden kann. Der Winkel, unter dem die Flansche 18 und 20 geneigt sind, ist derart gewählt, daß sich eine vertikale und in Längsrichtung verlaufende Ebene durch die äußeren Enden der Flansche 18, 20 außerhalb der Zähne der Zahnräder 24, 26 befindet, die sich von diesem Flansch 18, 20 weg erstrecken. Es wird weiterhin bedacht, daß die Ausnehmungen bzw. Durchgangsbohrungen zur Aufnahme der Schrauben 22 unter einem Winkel verlaufen müssen, der genügend Metall für eine dichte und stramme Verbindung sicherstellt, während die Flansche 18, 20 unter einem rechten Winkel zu der Schnittstelle miteinander verbunden werden. Dementsprechend wären Winkel von ca. 20 Grad bis ca. 40 Grad gegenüber der Vertikalen zufriedenstellend, wobei ungefähr 30 Grad mit Bezug zur Vertikalen bevorzugt werden. Desweiteren ist es möglich, einen Satz von Gehäuseeinheiten 12, 14, 16 mit Flanschen 18, 20 herzustellen, die nach unten konvergieren und einen anderen Satz mit Flanschen 18, 20, die nach oben konvergieren, und die beiden Sätze von Gehäuseeinheiten 12, 14, 16 in abwechselnder Weise über die Länge des Werkzeugbalkens zu montieren, anstatt, wie bevorzugt, an allen Gehäuseeinheiten 12, 14, 16 die Flansche 18, 20 parallel zueinander verlaufen zu lassen, so daß alle Gehäuseeinheiten 12, 14, 16, identisch sind. Wenn derart konstruierte Gehäuseeinheiten 12, 14, 16 in dieser Weise benutzt werden, ist es nicht erforderlich, eine Gehäuseeinheit 12, 14, 16, die von den beiden anderen Gehäuseeinheiten 12, 14, 16 entfernt wird, zu drehen, da ein Außereingriffbringen dadurch hervorgerufen werden kann, daß die Gehäuseeinheit 12 in vertikaler Richtung bezogen auf die Gehäuseeinheiten 14, 16 an seinen gegenüberliegenden Flanschen 18, 20 entfernt wird.

## Patentansprüche

1. Gehäuseeinheit (12) eines mehrteiligen Werkzeugbalkens mit beidseitigen Flanschen (18, 20) zur Verbindung mit weiteren Gehäuseeinheiten (14, 16), **dadurch gekennzeichnet, daß** die Flansche (18, 20) mit Bezug zu einer durch sie verlaufenden Haupterstreckungsebene der Gehäuseeinheit (12) geneigt verlaufen.

2. Gehäuseeinheit nach Anspruch 1, **dadurch gekennzeichnet, daß** die Flansche (18, 20) zueinander parallel verlaufen.

3. Gehäuseeinheit nach Anspruch 1, **dadurch gekennzeichnet, daß** die Flansche (18, 20) zueinander divergierend verlaufen.

4. Gehäuseeinheit nach einem oder mehreren der vorherigen Ansprüche, **dadurch gekennzeichnet, daß** der Winkel zwischen der Fläche des Flansches (18, 20) und einer auf der Haupterstreckungsebene stehenden Senkrechten 20 bis 40 Grad beträgt.

5. Gehäuseeinheit nach einem oder mehreren der vorherigen Ansprüche, **gekennzeichnet durch** ein oder mehrere Zahnräder (24, 26), die im Innern der Gehäuseeinheit (12, 14, 16) drehbar gelagert sind und über wenigstens einen der Flansche (18, 20) derart hinausragen, daß der Teilkreis die Ebene der Fläche des Flansches (18, 20) schneidet.

6. Gehäuseeinheit nach einem oder mehreren der vorherigen Ansprüche, **gekennzeichnet durch** Schrauben (22), die in senkrecht zu der Fläche des Flansches (18, 20) verlaufenden Ausnehmungen aufgenommen sind.

7. Mähbalken eines Mähgeräts mit einer Vielzahl von Gehäuseeinheiten (12, 14, 16) nach einem oder mehreren der vorherigen Ansprüche, die an den Trennstellen mittels Schrauben (22) lösbar verbunden sind.

8. Mähbalken nach Anspruch 7, **dadurch gekennzeichnet, daß** die Gehäuseeinheiten (12, 14, 16) mittels einer Versteifungstraverse untereinander verbindbar sind.

## Claims

1. A housing unit (12) of a multi-part tool bar, with flanges (18, 20) at both ends for connection to further housing units (14, 16), **characterized in that** the flanges (18, 20) are inclined with respect to a main plane of extent of the housing unit (12) running through them.

2. A housing unit according to claim 1, **characterized in that** the flanges (18, 20) run parallel to one another.

3. Housing unit according to claim 1, **characterized in that** the flanges (18, 20) run divergently from one another.

4. A housing unit according to one or more of the preceding claims, **characterized in that** the angle between the surface of the flange (18, 20) and a perpendicular to the main plane of extent amounts to 20 to 40 degrees.

5. A housing unit according to one or more of the preceding claims, **characterized by** one or more gearwheels (24, 26) which are mounted rotatably in the interior of the housing unit (12, 14, 16) and project beyond at least one of the flanges (18, 20) so that the pitch circle intersects the plane of the surface of the flange (18, 20).

6. A housing unit according to one or more of the preceding claims, **characterized by** screws (22) which are received in recesses running perpendicular to the surface of the flange (18, 20).

7. A cutter-bar of a mower with a plurality of housing units (12, 14, 16) according to one or more of the preceding claims, which are releasably connected at the joints by means of screws (22).

8. A cutter-bar according to claim 7, **characterized in that** the housing units (12, 14, 16) can be connected to each other by means of a stiffener cross-beam.

## Revendications

1. Module en forme de boîtier (12) pour un outil de travail formé par une barre en plusieurs parties, comprenant des brides (18, 20) bilatérales destinées à l'assemblage avec d'autres modules en forme de boîtier (14, 16), **caractérisé en ce que** les brides (18, 20) sont inclinées par rapport à un plan d'extension principal du module en forme de boîtier (12), lequel plan passe à travers lesdites brides.

2. Module en forme de boîtier selon la revendication 1, **caractérisé en ce que** les brides (18, 20) sont parallèles l'une à l'autre.

3. Module en forme de boîtier selon la revendication 1, **caractérisé en ce que** les brides (18, 20) divergent l'une par rapport à l'autre.

4. Module en forme de boîtier selon une ou plusieurs revendications précédentes, **caractérisé en ce que** l'angle formé entre la surface de la bride (18, 20) et une verticale sur le plan d'extension principal est égal à 20 à 40 degrés.

5. Module en forme de boîtier selon une ou plusieurs revendications précédentes, **caractérisé par** une ou plusieurs roues dentées (24, 26), qui sont logées de manière à pouvoir tourner à l'intérieur du module en forme de boîtier (12, 14, 16) et s'avancent en saillie au-dessus d'au moins une bride (18, 20), de telle sorte que le cercle primitif de référence coupe le plan de la surface de la bride (18, 20).

6. Module en forme de boîtier selon une ou plusieurs revendications précédentes, **caractérisé par** des vis (22), qui sont logées dans des évidements perpendiculaires à la surface de la bride (18, 20).

7. Barre de coupe d'une moissonneuse comprenant une pluralité de modules en forme de boîtier (12, 14, 16) selon une ou plusieurs revendications précédentes, qui sont assemblés de manière amovible par des vis (22) au niveau des zones de séparation.

8. Barre de coupe selon la revendication 7, **caractérisée en ce que** les modules en forme de boîtier (12, 14, 16) peuvent être assemblés les uns aux autres au moyen d'une traverse de rigidité.
